# DEMANDE DE BREVET EUROPEEN

(11) **EP 0 596 803 A1**
(43) Date de publication de la demande: **11.05.1994**
(21) Numéro de dépôt: 93402707.9
(22) Date de dépôt: 04.11.1993
(51) Int. Cl.: G01V 1/36

(54) **Procédé et dispositif d'atténuation de bruits de surface, et enregistrement obtenu**

(30) Priorité: 04.11.1992 FR 9213206
(71) Demandeur: COMPAGNIE GENERALE DE GEOPHYSIQUE, F-91300 Massy (FR)
(72) Inventeur: Michon, Dominique, F-75005 Paris (FR)
(74) Mandataire: Martin, Jean-Jacques

(57) **Abrégé**

L'invention concerne un procédé de prospection sismique du type dans lequel on provoque à l'aide d'une source sismique (1) un ébranlement (2) dans le sous-sol et l'on enregistre à l'aide de géophones (3) délivrant chacun un signal sismique (11), des données sismiques contenant une information utile sur la géologie du sous-sol, cette information étant susceptible d'être masquée par des signaux de bruits indésirables, présents dans les signaux sismiques délivrés par les géophones et dus à des ondes sonores (7) s'étant propagées dans l'air jusqu'aux géophones. On associe aux géophones (3) au moins un microphone (8), apte à délivrer un signal représentatif de la perturbation apportée par lesdites ondes sonores (7) et l'on retranche, après adaptation, au signal sismique (11) délivré par chaque géophone le signal (12) délivré par le microphone associé, en vue d'éliminer lesdits signaux de bruits indésirables.

## Description

La présente invention concerne le domaine de la prospection sismique.

L'invention concerne plus particulièrement un procédé de prospection sismique terrestre du type dans lequel on provoque, à l'aide d'une source sismique, un ébranlement dans le sous-sol et l'on enregistre des données sismiques à l'aide de géophones délivrant chacun un signal sismique.

La source sismique est habituellement constituée d'un ou plusieurs camions vibrateurs, comportant une plaque pulsante actionnée par un système de servo-vérins hydrauliques qui exercent sur la plaque posée sur le sol une force alternative. Les géophones sont typiquement constitués par des capteurs électromagnétiques, posés sur le sol ou enterrés à faible profondeur, transformant les mouvements verticaux du sol en une tension électrique. Les géophones reçoivent les ondes réfléchies par les interfaces géologiques du sous-sol, ainsi qu'un bruit de surface, indésirable, ne contenant pas d'information sur les structures profondes. Ce bruit de surface est dû notamment à des ondes se propageant à la surface du sol, du type ondes de Rayleigh, et aux ondes sonores se propageant dans l'air, indépendamment du sol ou couplées avec la surface de celui-ci, jusqu'aux géophones qu'elles excitent en vibration, soit directement si ceux-ci sont posés sur le sol, soit indirectement en faisant vibrer la surface du sol si ceux-ci sont enterrés à faible profondeur.

On a proposé d'atténuer le bruit de surface à l'aide d'un positionnement particulier des camions vibrateurs et des géophones. Toutefois, une telle solution atténue principalement les ondes de surface du type ondes de Rayleigh tandis que les ondes sonores demeurent gênantes.

On a proposé, pour atténuer ces dernières, des solutions consistant à disposer autour des camions vibrateurs des écrans interceptant les ondes sonores ou des solutions consistant à recréer, activement, au niveau de la plaque pulsante, des interférences destructrices, tel que cela est décrit dans la publication européenne EP-A2-0 390 560. Ces solutions, outre leur coût élevé, n'ont par ailleurs pas résolu entièrement le problème du bruit de surface dû aux ondes sonores car elles ne sont efficaces que dans un espace limité qui peut difficilement couvrir tous les géophones et de plus elles restent inefficaces vis-à-vis du bruit de surface provenant de sources sonores autres que la source sismique.

La présente invention vise un procédé de prospection sismique du type dans lequel on provoque à l'aide d'une source sismique un ébranlement dans le sous-sol et l'on enregistre, à l'aide de géophones délivrant chacun un signal sismique, des données sismiques contenant une information utile sur la géologie du sous-sol, susceptible d'être masquée par des signaux de bruits indésirables présents dans les signaux sismiques, dus à des ondes sonores s'étant propagées dans l'air jusqu'aux géophones.

Conformément à une caractéristique essentielle du procédé selon l'invention, on associe aux géophones au moins un microphone placé dans l'air, apte à délivrer un signal représentatif de la perturbation apportée par lesdites ondes sonores et l'on retranche, après adaptation, au signal sismique délivré par chaque géophone le signal délivré par le microphone associé en vue d'éliminer lesdits signaux de bruits indésirables.

Selon un premier procédé, conforme à l'invention, on associe à chaque géophone un microphone et l'on retranche, après adaptation, au signal sismique délivré par chaque géophone le signal délivré par le microphone associé puis on enregistre le signal sismique épuré qui en résulte.

Selon un deuxième procédé conforme à l'invention, on enregistre, sur deux canaux séparés, les signaux délivrés respectivement par chaque géophone et par le microphone associé puis on retranche, ultérieurement, à la lecture de l'enregistrement obtenu, après adaptation, au signal sismique délivré par chaque géophone, le signal délivré par le microphone associé de façon à produire un signal sismique épuré.

L'invention concerne également un dispositif de prospection sismique pour la mise en oeuvre du procédé cité ci-dessus, comprenant :
. une source sismique apte à provoquer un ébranlement dans le sous-sol,
. des géophones délivrant chacun un signal sismique en réponse à cet ébranlement, le signal sismique délivré par un géophone étant susceptible de contenir un signal de bruit indésirable dû à des ondes sonores s'étant propagées dans l'air jusqu'à ce géophone.

De façon caractéristique, le dispositif comprend en outre :
. au moins un microphone associé aux géophones, placé dans l'air et apte à délivrer un signal représentatif de la perturbation apportée par les ondes sonores.

Dans une réalisation du dispositif, celui-ci comprend en outre des moyens d'enregistrement du signal sismique épuré délivré par des moyens de traitement recevant les signaux délivrés par chaque géophone et le microphone associé, ces moyens de traitement éliminant les signaux de bruits indésirables.

Dans une autre réalisation du dispositif, celui-ci comprend en outre des moyens d'enregistrement sur deux canaux séparés des signaux délivrés par chaque géophone et le microphone associé, en vue d'un traitement différé de ces signaux.

L'invention concerne également un enregistrement de données sismiques obtenu à l'aide du dispositif précité.

D'autres caractéristiques et avantages de la présente invention apparaîtront à la lecture de la description détaillée qui va suivre, de deux exemples de réalisation non limitatifs de l'invention, et à l'examen du dessin annexé sur lequel :
- la figure 1 est une vue schématique d'un dispositif de prospection sismique conforme à une première variante de réalisation de l'invention,
- la figure 2 est une vue schématique d'un dispositif de prospection sismique conforme à une deuxième variante de réalisation de l'invention,
- la figure 3 montre un enregistrement de données sismiques à l'aide de quatre géophones ainsi qu'un enregistrement de signal sonore obtenu à l'aide d'un microphone associé aux géophones.

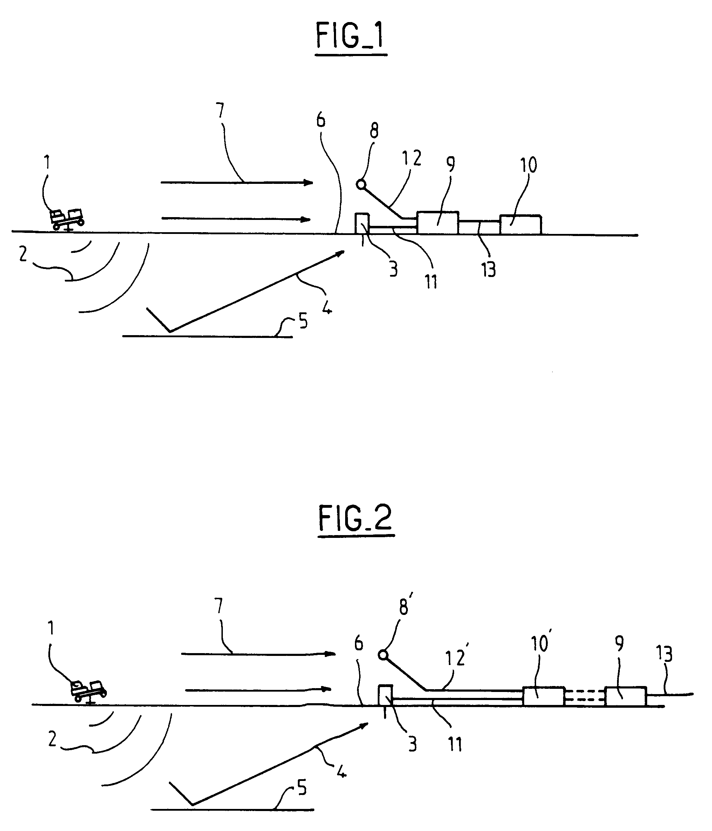

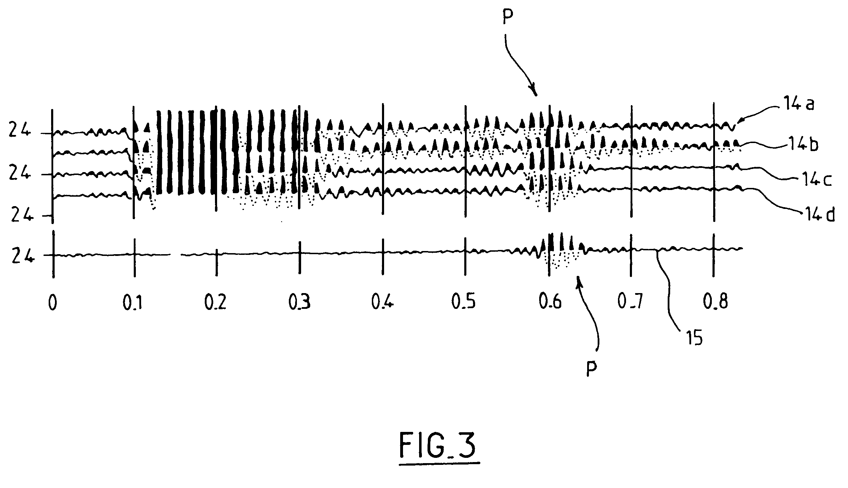

On a désigné sur les figures 1 et 2 par la référence 1 une source sismique destinée à provoquer dans le sous-sol un ébranlement 2. La source sismique 1 est par exemple constituée de façon connue en elle-même d'un ou plusieurs camions vibrateurs ou d'une ou plusieurs charges explosives. L'ébranlement 2 se propage dans le sous-sol et l'on dispose à la surface du sol 6 ou enterrés à faible profondeur des géophones 3 pour recevoir les réflexions 4 de cet ébranlement 2 sur des interfaces géologiques 5 du sous-sol. Les géophones 3 qui reçoivent les réflexions 4 délivrent un signal sismique contenant une information utile sur la géologie du sous-sol. Cette information utile est susceptible d'être masquée par des signaux de bruits indésirables présents dans les signaux sismiques délivrés par les géophones, dus à des ondes sonores 7 se propageant dans l'air jusqu'aux géophones dont ils perturbent la réception des réflexions 4. Ces ondes sonores 7 peuvent provenir de la source sismique 1 elle-même, ou provenir d'autres sources indépendantes de bruits, distinctes de la source sismique 1. A titre d'illustration, on a représenté sur la figure 3 quatre traces 14a, 14b, 14c, 14d obtenues à l'aide de quatre géophones. La source sismique est située à 170 m des géophones. On a indiqué par la flèche P une perturbation apportée par des ondes sonores.

Conformément à un premier exemple de réalisation de l'invention, on associe à chaque géophone 3 un microphone 8, maintenu en l'air par des moyens de support aisément réalisables par l'homme de l'art et non représentés, de préférence au voisinage du géophone 3 et à l'aplomb de celui-ci. Ces moyens de support évitent la transmission des réflexions 4 jusqu'au microphone 8 et comportent à cet effet avantageusement des moyens amortisseurs. Le microphone 8 délivre un signal 12 représentatif de la perturbation créée par les ondes sonores sur le géophone 3.

On traite, après adaptation, le signal sismique 11 délivré par chaque geophone 3, dans des moyens de traitement 9 recevant également le signal 12 de façon à délivrer un signal épuré 13, dans lequel on a éliminé le signal de bruit indésirable présent dans le signal sismique 11, avant son enregistrement par des moyens d'enregistrement 10. Le traitement consiste dans l'essentiel à retrancher au signal sismique 11 la composante de signal de bruit indésirable. Les signaux délivrés par chaque géophone et le microphone associé peuvent être mis sous forme numérique avant de retrancher dans un calculateur au signal sismique 11 la composante de bruit indésirable. En variante, le traitement peut être effectué de façon analogique. Il peut être nécessaire d'amplifier les signaux délivrés par chaque géophone et le microphone associé, afin d'ajuster les amplitudes de ces signaux en vue de leur traitement. Les gains d'amplification à apporter à cet effet aux signaux délivrés par chaque géophone et le microphone associé peuvent être déterminés, en l'absence d'ébranlement, en mesurant directement les signaux délivrés par un géophone et le microphone associé en réponse à un signal sonore donné.

Dans un deuxième exemple de réalisation de l'invention, représenté sur la figure 2, on associe aux géophones 3 un seul microphone 8' et les signaux sismiques 11 et le signal 12' délivré par le microphone 8' sont enregistrés sur des canaux différents par des moyens d'enregistrement 10'. On a représenté sur la figure 3 une trace 15 correspondant au signal 12 délivré par un microphone associé aux quatre géophones et positionné au même point qu'eux. On reconnaît sur cette trace la perturbation P apportée par les ondes sonores sur les traces 14a, 14b, 14c et 14d. Ensuite, ces enregistrements effectués par les moyens d'enregistrement 10' sont lus, sur le site même ou dans un centre de traitement, et envoyés vers des moyens de traitement 9, générant un signal sismique épuré 13, après adaptation tenant compte notamment de la différence des temps d'arrivée des ondes sonores au microphone 8' et aux géophones 3. On comprendra aisément que la variante de réalisation représentée à la figure 2 présente l'avantage de réduire le coût du dispositif en réduisant le nombre de microphones et en permettant un traitement différé, dans un centre de calcul éloigné du site de prospection, des signaux.

Finalement, un procédé de prospection sismique conforme à l'invention, et le dispositif pour la mise en oeuvre de ce procédé, constituent une solution simple et efficace pour l'élimination des signaux de bruits indésirables dus à des ondes sonores se propageant dans l'air jusqu'aux géophones.

## Revendications

**1/** Procédé de prospection sismique du type dans lequel on provoque à l'aide d'une source sismique (1) un ébranlement (2) dans le sous-sol et l'on enregistre à l'aide de géophones (3) délivrant chacun un signal sismique (11), des données sismiques contenant une information utile sur la géologie du sous-sol, cette information étant susceptible d'être masquée par des signaux de bruits indésirables présents dans les signaux sismiques délivrés par les géophones et dus à des ondes sonores (7) s'étant propagées dans l'air jusqu'aux géophones, caractérisé en ce que l'on associe aux géophones (3) au moins un microphone (8 ; 8') placé dans l'air, apte à délivrer un signal représentatif de la perturbation apportée par lesdites ondes sonores (7) et l'on retranche, après adaptation, au signal sismique (11) délivré par chaque géophone le signal (12 ; 12') délivré par le microphone associé, en vue d'éliminer lesdits signaux de bruits indésirables.

**2/** Procédé selon la revendication 1, caractérisé en ce que l'on associe à chaque géophone (3) un microphone (8) et l'on retranche, après adaptation, au signal sismique (11) délivré par chaque géophone le signal (12) délivré par le microphone associé puis on enregistre le signal sismique épuré qui en résulte.

**3/** Procédé selon la revendication 1, caractérisé en ce que l'on enregistre, sur deux canaux séparés, les signaux délivrés respectivement par chaque géophone et par le microphone associé (8') puis on retranche, ultérieurement, à la lecture de l'enregistrement obtenu, après adaptation, au signal sismique délivré par chaque géophone, le signal délivré par le microphone associé de façon à produire un signal sismique épuré.

**4/** Dispositif de prospection sismique pour la mise en oeuvre du procédé selon l'une des revendications 1 à 3, comprenant :
. une source sismique (1) apte à provoquer un ébranlement (2) dans le sous-sol,
. des géophones (3) délivrant chacun un signal sismique (11) en réponse à cet ébranlement, le signal sismique délivré par un géophone étant susceptible de contenir un signal de bruit indésirable dû à des ondes sonores s'étant propagées dans l'air jusqu'à ce géophone,
caractérisé en ce qu'il comprend au moins un microphone (8 ; 8') associé aux géophones, placé dans l'air et apte à délivrer un signal (12 ; 12') représentatif de la perturbation apportée par les ondes sonores (7).

**5/** Dispositif selon la revendication 4, caractérisé en ce qu'il comprend en outre des moyens d'enregistrement (10) du signal sismique épuré (13) délivré par des moyens de traitement recevant les signaux délivrés par chaque géophone et le microphone associé, ces moyens de traitement éliminant les signaux de bruits indésirables.

**6/** Dispositif selon la revendication 4, caractérisé en ce qu'il comprend en outre des moyens d'enregistrement (10') sur deux canaux séparés des signaux délivrés par chaque géophone (3) et par le microphone associé (18'), en vue d'un traitement différé de ces signaux.

**7/** Enregistrement de données sismiques obtenu à partir du dispositif selon l'une des revendications 4 à 6.
